# EUROPÄISCHE PATENTSCHRIFT

(11) **EP 2 265 735 B1**
(45) Veröffentlichungstag und Bekanntmachung des Hinweises auf die Patenterteilung: **10.06.2015**
(21) Anmeldenummer: 09721082.7
(22) Anmeldetag: 11.03.2009
(51) Int. Cl.: C21D 1/10, C21D 9/40, H05B 6/38, F16C 33/64

(54) **VORRICHTUNG ZUM INDUKTIVEN ERWÄRMEN VON ROTATIONSSYMMETRISCHEN BAUTEILEN UND VERFAHREN DAZU**
DEVICE FOR INDUCTION HEATING OF WORKPIECES WITH ROTATIONAL SYMMETRY AND METHOD THEREFORE
DISPOSITIF DE CHAUFFAGE PAR INDUCTION DE COMPOSANTS À SYMÉTRIE DE ROTATION, ET PROCÉDÉ CORRESPONDANT

(30) Priorität: 14.03.2008 DE 102008014165
(43) Veröffentlichungstag der Anmeldung: 29.12.2010
(73) Patentinhaber: AB SKF, 415 50 Göteborg (SE)
(72) Erfinder: BURTCHEN, Marco, 59555 Lippstadt (DE); JUNG, Michael, 97076 Würzburg (DE)
(74) Vertreter: Kohl, Thomas
(86) Internationale Anmeldenummer: PCT/EP2009/001737
(87) Internationale Veröffentlichungsnummer: WO 2009/112247

(56) Entgegenhaltungen:
- WO-A-2008/028638
- DE-A1-102007 014 637
- JP-A- 2006 344 421
- US-A- 4 949 758

## Beschreibung

Die Erfindung betrifft eine Vorrichtung zum Erwärmen wenigstens eines axialen Abschnitts einer rotationssymmetrischen Mantelfläche eines Werkstücks sowie ein entsprechendes Verfahren.

Aus dem Stand der Technik sind Rollenherdöfen bekannt, bei denen insbesondere durchzuhärtende Werkstücke, beispielsweise Wälzlagerringe, den Ofen in einer Längsrichtung durchlaufen und dabei unter anderem in vorgegebener Art und Weise erwärmt werden. Ein dem Erwärmen nachfolgendes Abschrecken führt dann zum wunschgemäßen beispielsweise martensitischen Durchhärten.

Eine Aufgabe der Erfindung ist es, eine verbesserte Vorrichtung zum Erwärmen wenigstens von Randschichten eines Werkstücks sowie ein entsprechendes Verfahren zu schaffen.

Die Aufgabe wird hinsichtlich der Vorrichtung durch den Gegenstand des Anspruchs 1 und hinsichtlich des Verfahrens durch den Gegenstand des Anspruchs 10 gelöst.

Bei bislang bekannten Induktionshärteverfahren überfährt in der Regel eine ringförmige Induktionsspule den zu härtenden kreiszylindrischen Ring in Axialrichtung (Vorschubverfahren) oder es wird eine der Kontur des zu härtenden Rings folgend ausgeformte Induktionsringspule an der Außen- oder Innenfläche des zu härtenden Rings platziert (Ganzflächenhärtung) solche Verfahren sind beispielsweise aus US 4949758, DE 10228333 und JP 58207327 bekannt. Dabei muss jeweils ein frequenzabhängiger Kopplungsabstand eingehalten werden, um eine hinreichende Induktion des Wirbelstroms in die Randschicht des zu härtenden Rings zu bewirken. Die Induktionsringspule und der zu härtende Ring sind dabei konzentrisch angeordnet. Die Verwendung einer starren Induktionsringspule war bislang dann ausgeschlossen, wenn bei bestimmten zu härtenden Ringtypen mit nichtzylindrischer Kontur die Konturänderung größer als der Kopplungsabstand war und ein axiales Verfahren der Induktionsringspule aufgrund von Borden und Hinterschneidungen am zu härtenden Ring nicht möglich war. Mit der erfindungsgemäßen Vorrichtung werden vorgenannte Einschränkungen mit Vorteil überwunden. Das Verschieben entlang der Längskontur mit definiertem Abstand erfolgt bei der erfindungsgemäßen Vorrichtung dabei insbesondere im Sinne einer NC-Steuerung.

Ferner wird in einer Ausführungsform mit Vorteil auch nicht durchgehärtet, sondern es werden nur die Randschichten einhergehend mit einem entsprechenden Erwärmen gehärtet, so dass neben einer zeitlich kürzeren Härtedauer gegenüber dem Durchhärten auch eine hohe Zähigkeit des Werkstückkerns erhalten bleibt und damit besonders umweltfreundlich gegenüber dem Durchhärten auch nur ein verringerter Energieverbrauch einhergeht.

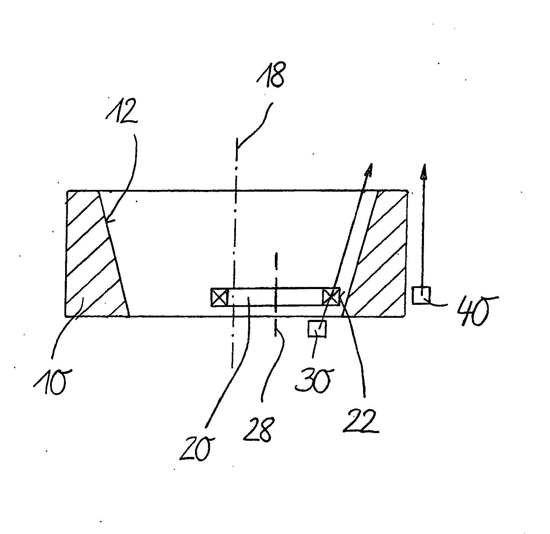

Weitere Vorteile, Merkmale und Einzelheiten der Erfindung ergeben sich aus dem im Folgenden beschriebenen Ausführungsbeispiel der Erfindung anhand der Figur.

Die Figur zeigt als ein Ausführungsbeispiel der Erfindung in Form einer Prinzipskizze einen Querschnitt durch eine Vorrichtung zum Härten randschichtartiger Bereiche einer Abrollfläche 12 für Kegelrollen eines Kegelrollenlageraußenrings 10. Dabei ist der Kegelrollenlageraußenring 10 so in der Vorrichtung angeordnet, dass seine Rotationsachse 18 in etwa vertikal ausgerichtet ist. Weiterhin umfasst die Vorrichtung in nicht näher dargestellter Art und Weise Rotationsmittel, mit denen der Kegelrollenlageraußenring 10 um seine Rotationsachse 18 während des Randschichthärtens ausreichend schnell gedreht wird, so dass während des Erwärmens eine über den Umfang der Abrollfläche 12 homogene Erwärmung erzielt wird.

Weiterhin umfasst die Vorrichtung einen einwindigen ringförmigen Induktor 20. Der Induktor 20 ist dabei derart ausgebildet, dass dessen Außendurchmesser kleiner als der kleinste Innendurchmesser eines ganzen Spektrums von Kegelrollenlagerauβenringtypen unterschiedlichster Dimensionierungen, umfassend den Kegelrollenlageraußenring 10 ist. Für ein Erwärmen der Abrollfläche 12 des Kegelrollenlageraußenrings 10 wird der Induktor 20 mit einem entsprechenden elektrischen Strom beaufschlagt und gemäß dem in der Figur eingetragenen schrägen Pfeil von unten nach oben bewegt.

Dabei ist der ringförmige Induktor 20 mit seiner Hauptachse 28 bezüglich der Rotationsachse 18 des Kegelrollenlageraußenrings 10 parallel und gleichzeitig beabstandet angeordnet, so dass der Induktor 20 eine Umfangsstelle 22 aufweist, die mit definiertem, insbesondere minimalem Abstand der Abrollfläche 12 gegenüberliegt. Diese Umfangsstelle 22 wird dabei für das Erwärmen mit gleichbleibendem Abstand zur Abrollfläche 12 entlang der Kontur der Abrollfläche 12 gemäß der in der Figur eingetragenen Pfeilrichtung von unten nach oben bewegt.

Besagter Umfangsstelle 22 des Induktors 20 wird eine Abschreckeinrichtung 30 entsprechend der Bewegung besagter Umfangsstelle 22 nachgerührt, wobei die Abschreckeinrichtung 30 unterhalb des Induktors 20 angeordnet ist und ein Abschrecken beispielsweise mit einem Polymer-/Wassergemisch oder eine Sprühabschreckung mit einem Gas-/Flüssigkeitsgemisch durchführt, so dass dem Erwärmen nachfolgend der entsprechende Abrollflächenabschnitt abgeschreckt und somit wunschgemäß gehärtet wird. Durch die in etwa vertikal ausgerichtete Rotationsachse 18 des Kegelrollenlageraußenrings 10 in Verbindung mit dem Anordnen der Abschreckeinrichtung 30 unterhalb des Induktors 20 wird mit Vorteil ein unerwünschtes Kühlen noch zu erwärmender bzw. zu härtender, weiter oben angeordneter Bereiche der Abrollfläche 12 beispielsweise durch herunterrinnendes Abschreckfluid verhindert.

Beispielsweise zum Erzielen bestimmter vorgegebener Härtetiefenverläufe kann an der äußeren Mantelfläche des Kegelrollenlageraußenrings 10 eine Kühleinrichtung 40 eingesetzt werden, die in etwa auf Höhe besagter Umfangsstelle 22 der Induktor 20 liegend angeordnet ist und synchron mit der Bewegung besagter Umfangsstelle 22 während des Erwärmens gemäß der in der Figur eingetragenen Pfeilrichtung von unten nach oben zum gleichzeitigen Kühlen vom Außenmantel her bewegt wird.

In einer anderen Ausführungsform können insbesondere zum Steuern bzw. Regeln der Position des Induktors 20 und/oder dessen Induktionsleistung an bestimmten Stellen des Kegelrollenlageraußenrings 10 Temperaturmessmittel vorgesehen sein, deren Online-Messergebnisse als Eingangsgröße besagter Steuerung bzw. Regelung dienen.

Mit der vorausgehend erläuterten Vorrichtung ist es dabei mit Vorteil möglich, mehrere hundert unterschiedlichst dimensionierte und ausgebildete Kegelrollenlagerringtypen mit einem Durchmessern von 200 bis 600 mm mit ein und derselben Vorrichtung zu härten. Weiterhin ist es natürlich auch in Abhängigkeit vom jeweiligen Kegelrollenlagerringtyp möglich, einen passenden dimensionierten Induktor aus einem begrenzten Set auszuwählen.

In anderen Ausführungen ist es natürlich auch möglich komplexere Längskonturen, beispielsweise den Außenmantel eines Kegelrollenlagerinnenrings, der bekanntlich an beiden axialen Enden mit einer Art Bord ausgebildet ist, zu härten. Dabei ist besagte Umfangsstelle des Induktors radial außen am Außenmantel des Kegelrollenlagerinnenrings anzuordnen und in einem definierten Abstand zum Außenmantel des Kegelrollenlagerinnenrings entlang der Kontur im Sinne einer NC-Steuerung zu bewegen. Weiterhin kann die Vorrichtung natürlich auch Fixiereinrichtungen für das Werkstück umfassen, so dass ein Verziehen des Werkstücks beim Abschrecken mit Vorteil verhindert wird.

## Patentansprüche

1. Vorrichtung zum Erwärmen wenigstens eines axialen Abschnitts einer rotationssymmetrischen Mantelfläche eines Werkstücks, umfassend folgende Merkmale:
- Rotationsmittel, mit denen das Werkstück um seine Rotationssache in Rotation versetzbar ist, und
- ein Induktor,
- dessen axiale Erstreckung wenigstens in einem dem Abschnitt zum Gegenüberliegen vorgesehenen Bereich kleiner als eine axiale Erstreckung des Abschnitts ist,
- der eine Stelle aufweist, die mit definiertem Abstand zum Gegenüberliegen des Abschnitts vorgesehen ist,
- der derart bewegbar ausgebildet, dass besagte Stelle mit definiertem Abstand entlang eines Längsprofils des Abschnitts verschiebbar ist, und
- der derart bewegbar ist, dass sich die Bewegung aus einer beliebigen Komponente in Rotationsachsenrichtung und einer dazu senkrecht stehenden Komponente zusammensetzt.

2. Vorrichtung nach Anspruch 1, wobei der Induktor ringartig und/oder als eine einwindige Induktionsspule ausgebildet ist.

3. Vorrichtung nach einem der Ansprüche 1 oder 2, wobei mit den Rotationsmitteln das Werkstück um seine in etwa vertikal ausgerichtete Rotationsachse drehbar ist.

4. Vorrichtung nach einem der Ansprüche 1 bis 3, wobei der Induktor für das Erwärmen bezüglich einer Bewegungskomponente in vertikaler Richtung von unten nach oben zum Bewegen vorgesehen ist.

5. Vorrichtung nach einem der Ansprüche 1 bis 4, wobei die Vorrichtung eine Abschreckeinrichtung umfasst, die der Bewegung besagter Stelle des Induktors entsprechend nachfolgend bewegbar ist, und die insbesondere unterhalb des Induktors angeordnet ist.

6. Vorrichtung nach einem der Ansprüche 1 bis 5, wobei das Werkstück hohl ist und ein dem jeweils erwärmten Mantelbereich auf der anderen Seite der Werkstückwandung gegenüberliegender Mantelbereich mit einer entsprechend besagter Stelle des Induktors bewegbaren Kühleinrichtung kühlbar ist.

7. Vorrichtung nach einem der Ansprüche 1 bis 6, wobei der Abschnitt von der Kreiszylinderform abweichend und/oder kegelstumpfmantelartig ist.

8. Vorrichtung nach einem der Ansprüche 1 bis 7, wobei der Abschnitt einer Außenmantelfläche des Werkstücks zugehört oder der Abschnitt einer Innenmantelfläche eines hohlzylinderartigen Werkstücks zugehört und der Induktor eine dazu durchmesserkleinere Außenmantelfläche aufweist.

9. Vorrichtung nach einem der Ansprüche 1 bis 8, wobei der Abschnitt dem Abrollflächenbereich eins inneren oder äußeren Laufbahnelements einer Kegelrollenlagerung zugehört.

10. Verfahren zum Erwärmen wenigstens eines axialen Abschnitts einer rotationssymmetrischen Mantelfläche eines Werkstücks, umfassend folgende Schritte:
- Das Werkstück wird um seine Rotationssache gedreht, und
- ein Induktor, dessen axiale Erstreckung in axialer Richtung wenigstens in einem dem Abschnitt zum Gegenüberliegen vorgesehenen Bereich kleiner als eine axiale Erstreckung des Abschnitts ist, wird mit einer Stelle, die mit definiertem Abstand dem Abschnitt gegenüberliegt, entlang eines Längsprofils des Abschnitts mit definiertem Abstand bewegt, wobei der Induktor derart bewegt wird, dass sich die Bewegung aus einer beliebigen Komponente in Rotationsachsrichtung und einer dazu senkrecht stehenden Komponente zusammensetzt.

11. Verfahren nach Anspruch 10, wobei das Werkstück um seine in etwa vertikal ausgerichtete Rotationsachse gedreht wird.

12. Verfahren nach einem der Ansprüche 10 oder 11, wobei der Induktor für das Erwärmen bezüglich einer Bewegungskomponente in vertikaler Richtung von unten nach oben bewegt wird.

13. Verfahren nach einem der Ansprüche 10 bis 12, wobei die Vorrichtung eine Abschreckeinrichtung umfasst, die der Bewegung besagter Stelle des Induktors entsprechend nachfolgend bewegt wird.

14. Verfahren nach einem der Ansprüche 10 bis 13, wobei das Werkstück hohl ist und ein dem jeweils erwärmten Mantelbereich auf der anderen Seite der Werkstückwandung gegenüberliegender Mantelbereich mit einer entsprechend besagter Stelle des Induktors bewegten Kühleinrichtung gekühlt wird.

## Claims

1. Device for heating at least one axial portion of a rotationally symmetrical surface area of a workpiece, comprising the following features:
- rotation means, by which the workpiece can be set in rotation about its axis of rotation, and
- an inductor,
- the axial extent of which, at least in a region intended to lie opposite the portion, is smaller than an axial extent of the portion,
- which has a location which is intended to lie opposite the portion with a defined clearance,
- which is designed to be movable in such a way that the said location can be displaced with the defined clearance along a longitudinal profile of the portion, and
- which can be moved in such a way that the movement is composed of any component in the direction of the axis of rotation and of component standing perpendicularly thereto.

2. Device according to Claim 1, the inductor being of ring-like form and/or being formed as a single-turn induction coil.

3. Device according to either one of Claims 1 and 2, the workpiece being rotatable by the rotation means about its approximately vertically oriented axis of rotation.

4. Device according to one of Claims 1 to 3, the inductor, for heating purposes, being intended, in respect of one movement component, to move in the vertical direction from the bottom upwards.

5. Device according to one of Claims 1 to 4, the device comprising a quenching arrangement which can be moved so as correspondingly to follow the movement of the said location of the inductor and which, in particular, is arranged underneath the inductor.

6. Device according to one of Claims 1 to 5, the workpiece being hollow, and a surface area region which lies opposite the in each case heated surface area region on the other side of the workpiece wall being coolable by means of a cooling arrangement moveable correspondingly to the said location of the inductor.

7. Device according to one of Claims 1 to 6, the portion deviating from the circular-cylindrical shape and/or resembling the envelope of a cone frustum.

8. Device according to one of Claims 1 to 7, the portion belonging to an outer surface area of the workpiece or the portion belonging to an inner surface area of a hollow-cylinder-like workpiece, and the inductor having an outer surface area with a smaller diameter in relation thereto.

9. Device according to one Claims 1 to 8, the portion belonging to the rolling surface region of an inner or outer raceway element of a tapered roller bearing.

10. Method for heating at least one axial portion of a rotationally symmetrical surface area of a workpiece, comprising the following steps:
- the workpiece is rotated about its axis of rotation, and
- an inductor, of which the axial extent in the axial direction, at least in the region intended to lie opposite the portion, is smaller than an axial extent of the portion, is moved, with a location which lies opposite the portion with a defined clearance, along a longitudinal profile of the portion with the defined clearance, the inductor being moved in such a way that the movement is composed of any component in the direction of the axis of rotation and of a component standing perpendicularly thereto.

11. Method according to Claim 10, the workpiece being rotated about its approximately vertically oriented axis of rotation.

12. Method according to either one of Claims 10 and 11, the inductor, for heating purposes, being moved, with respect to one movement component, in the vertical direction from the bottom upwards.

13. Method according to one of Claims 10 to 12, the device comprising a quenching arrangement which is moved so as to correspondingly follow the movement of the said location of the inductor.

14. Method according to one of Claims 10 to 13, the workpiece being hollow, and a surface area region lying opposite the in each case heated surface area region on the other side of the workpiece wall being cooled by means of a cooling arrangement moved correspondingly to the said location of the inductor.

## Revendications

1. Dispositif de chauffage d'au moins une portion axiale d'une surface d'enveloppe à symétrie de révolution d'une pièce, comportant les caractéristiques suivantes :
- des moyens de rotation, à l'aide desquels la pièce peut être mise en rotation autour de son axe de rotation, et
- un inducteur,
- dont l'étendue axiale est inférieure à une étendue axiale de la portion au moins dans une région prévue en regard de la portion,
- qui comprend un point qui est prévu à une distance définie en regard de la portion,
- qui est réalisé de manière déplaçable, de telle sorte que ledit point soit mobile à une distance définie le long d'un profil longitudinal de la portion, et
- qui est déplaçable de telle sorte que le déplacement se compose d'une composante quelconque dans la direction de l'axe de rotation et d'une composante normale à celle-ci.

2. Dispositif selon la revendication 1, dans lequel l'inducteur est réalisé sous forme annulaire et/ou sous la forme d'une bobine d'induction monospire.

3. Dispositif selon l'une quelconque des revendications 1 et 2, dans lequel la pièce peut être, à l'aide des moyens de rotation, tournée autour de son axe de rotation orienté approximativement verticalement.

4. Dispositif selon l'une quelconque des revendications 1 à 3, dans lequel l'inducteur est, pour le chauffage, prévu pour se déplacer du bas vers le haut dans la direction verticale en ce qui concerne une composante de déplacement.

5. Dispositif selon l'une quelconque des revendications 1 à 4, le dispositif comportant un dispositif de trempe qui peut être déplacé de manière à suivre de manière correspondante le déplacement dudit point de l'inducteur, et qui est disposé en particulier en dessous de l'inducteur.

6. Dispositif selon l'une quelconque des revendications 1 à 5, dans lequel la pièce est creuse et une région d'enveloppe opposée à la région d'enveloppe chauffée respective sur l'autre côté de la paroi de pièce peut être refroidie à l'aide d'un dispositif de refroidissement pouvant être déplacé en fonction dudit point de l'inducteur.

7. Dispositif selon l'une quelconque des revendications 1 à 6, dans lequel la portion est différente de la forme cylindrique circulaire et/ou est en forme d'enveloppe tronconique.

8. Dispositif selon l'une quelconque des revendications 1 à 7, dans lequel la portion appartient à une surface d'enveloppe extérieure de la pièce ou la portion appartient à une surface d'enveloppe intérieure d'une pièce de forme cylindrique creuse et l'inducteur comprend une surface d'enveloppe extérieure de plus petit diamètre par rapport à celle-ci.

9. Dispositif selon l'une quelconque des revendications 1 à 8, dans lequel la portion appartient à une région de surface de roulement d'un élément de chemin de roulement intérieur ou extérieur d'un palier à rouleaux coniques.

10. Procédé de chauffage d'au moins une portion axiale d'une surface d'enveloppe à symétrie de révolution d'une pièce, comportant les étapes suivantes :
- la pièce est tournée autour de son axe de rotation, et
- un inducteur, dont l'étendue axiale dans la direction axiale est inférieure à une étendue axiale de la portion au moins dans une région prévue en regard de la portion, est déplacé, par un point qui est à une distance définie en regard de la portion, le long d'un profil longitudinal de la portion à une distance définie, l'inducteur étant déplacé de telle sorte que le déplacement se compose d'une composante quelconque dans la direction de l'axe de rotation et d'une composante normale à celle-ci.

11. Procédé selon la revendication 10, dans lequel la pièce est tournée autour de son axe de rotation orienté approximativement verticalement.

12. Procédé selon l'une quelconque des revendications 10 et 11, dans lequel l'inducteur est, pour le chauffage, déplacé du bas vers le haut dans la direction verticale en ce qui concerne une composante de déplacement.

13. Procédé selon l'une quelconque des revendications 10 à 12, le dispositif comportant un dispositif de trempe qui est déplacé de manière à suivre de manière correspondante le déplacement dudit point de l'inducteur.

14. Procédé selon l'une quelconque des revendications 10 à 13, dans lequel la pièce est creuse et une région d'enveloppe opposée à la région d'enveloppe chauffée respective sur l'autre côté de la paroi de pièce est refroidie à l'aide d'un dispositif de refroidissement déplacé en fonction dudit point de l'inducteur.
